(19) Europäisches Patentamt
European Patent Office
Office européen des brevets

(11) **EP 1 420 157 B1**

(12) **EUROPÄISCHE PATENTSCHRIFT**

(45) Veröffentlichungstag und Bekanntmachung des Hinweises auf die Patenterteilung:
**16.05.2007 Patentblatt 2007/20**

(51) Int Cl.:
*F02D 41/40* *(2006.01)*    *F02D 41/14* *(2006.01)*
*F02D 41/30* *(2006.01)*

(21) Anmeldenummer: **03103924.1**

(22) Anmeldetag: **23.10.2003**

(54) **Verfahren zur Ermittlung der Einspritzmenge einer Brennkraftmaschine**

Method for determining the injected fuel amount of a combustion engine

Procédé pour déterminer la quantité de carburant injecté dans un moteur à combustion interne

(84) Benannte Vertragsstaaten:
**DE FR GB IT**

(30) Priorität: **14.11.2002 DE 10252988**

(43) Veröffentlichungstag der Anmeldung:
**19.05.2004 Patentblatt 2004/21**

(73) Patentinhaber: **SIEMENS AKTIENGESELLSCHAFT**
**80333 München (DE)**

(72) Erfinder: **Rabl, Hans-Peter, Dr.**
**93309, Kehlheim (DE)**

(56) Entgegenhaltungen:
**EP-A- 1 088 980**    **DE-A- 4 122 139**
**DE-A- 10 004 001**    **DE-A- 10 218 552**
**JP-A- 2003 278 584**

EP 1 420 157 B1

**Beschreibung**

Die Erfindung betrifft ein Verfahren zur Ermittlung der Einspritzmenge einer Brennkraftmaschine gemäß dem Oberbegriff des Anspruchs 1.

Es ist bekannt, z.B. aus DE 10218552, die Laufruhe einer Brennkraftmaschine auszuwerten, um daraus Rückschlüsse auf die Einspritzmenge in den verschiedenen Brennräumen zu ziehen. Hierzu wird mit einem Drehzahlsensor die Drehbeschleunigung der Kurbelwelle gemessen, die durch die jeweilige Einspritzmenge bestimmt wird. So verursacht eine große Einspritzmenge in dem betroffenen Verbrennungstakt eine entsprechend große Drehbeschleunigung der Kurbelwelle, wohingegen eine kleine Einspritzmenge nur zu einer entsprechend kleineren Drehbeschleunigung führt. Die Einspritzmenge kann jedoch aufgrund von fertigungs- und alterungsbedingten Bauteiltoleranzen zwischen den aufeinander folgenden Verbrennungstakten und zwischen den einzelnen Brennräumen schwanken, was zu unterschiedlichen Drehbeschleunigungen führt und damit eine Laufunruhe der Brennkraftmaschine verursacht. Dieser Laufunruhe wird bei bekannten Brennkraftmaschinen dadurch entgegengewirkt, dass die Einspritzmengen in den einzelnen Brennräumen durch eine geeignete Ansteuerung der verschiedenen Injektoren aneinander angeglichen werden. Die Steuersignale für die verschiedenen Injektoren werden hierbei solange verändert, bis jede Einspritzung die gleiche Drehbeschleunigung der Kurbelwelle verursacht, was auf eine einheitliche Einspritzmenge in den verschiedenen Brennräumen schließen lässt.

Nachteilig an diesem bekannten Verfahren ist jedoch die Tatsache, dass nur die gesamte Einspritzmenge ermittelt werden kann. Bei modernen Brennkraftmaschinen erfolgt jedoch zusätzlich zu einer Haupteinspritzung noch eine Voreinspritzung o der eine Nacheinspritzung. So kann eine Voreinspritzung eingesetzt werden, um die Geräusch- und Schadstoffemissionen zu verringern, während eine Nacheinspritzung sinnvoll sein kann, um die Abgastemperatur in einem Oxidationskatalysator zu erhöhen. Eine derartige Vor- oder Nacheinspritzung kann jedoch bei dem bekannten Verfahren nicht getrennt von der Haupteinspritzung untersucht werden, so dass es bisher nicht möglich ist, die Vor- oder Nacheinspritzmenge zu ermitteln.

Der Erfindung liegt also die Aufgabe zugrunde, bei einer Voreinspritzung oder einer Nacheinspritzung die eingespritzten Kraftstoffmengen zu ermitteln.

Diese Aufgabe wird, ausgehend von dem eingangs beschriebenen bekannten Verfahren gemäß dem Oberbegriff des Anspruchs 1, durch die kennzeichnenden Merkmale des Anspruchs 1 gelöst.

Die Erfindung umfasst die allgemeine technische Lehre, die Nacheinspritzmenge oder die Voreinspritzmenge außerhalb des normalen Betriebs der Brennkraftmaschine in einem besonderen Diagnosebetrieb zu ermitteln.

Bei diesem Diagnosebetrieb erfolgt eine Nacheinspritzung vorzugsweise während des Auslasstaktes der Brennkraftmaschine, so dass der bei der Nacheinspritzung eingespritzte Kraftstoff nicht verbrannt wird.

Es ist jedoch alternativ auch möglich, dass die Nacheinspritzung im Diagnosebetrieb während des Expansionstaktes erfolgt, sofern die Nacheinspritzung so spät erfolgt, dass keine Verbrennung erfolgt. Dies ist in der Regel dann gegeben, wenn der Nacheinspritzung erst erfolgt, wenn die Brenndauer der Haupteinspritzung beendet ist. Bei einer Nacheinspritzung während des Expansionstaktes der Brennkraftmaschine erfolgt die Nacheinspritzung deshalb vorzugsweise bei einem Kurbelwellenwinkel im Bereich von 90° bis 180° nach dem oberen Totpunkt (OT).

Das Abgas der Brennkraftmaschine mit dem unverbrannten Kraftstoff der Nacheinspritzung wird dann durch eine herkömmliche Abgasrückführung in den Ansaugtrakt der Brennkraftmaschine zurückgeführt und sorgt dort für eine Erhöhung des Füllungsgrads und einen entsprechenden Drehmomentanstieg, so dass auch die Nacheinspritzung eine Drehbeschleunigung der Kurbelwelle verursacht.

Im Rahmen des Diagnosebetriebs wird dann die zusätzliche Drehbeschleunigung der Kurbelwelle ermittelt, die durch die Nacheinspritzung verursacht wird.

Aus der durch die Nacheinspritzung verursachten zusätzlichen Drehbeschleunigung der Kurbelwelle kann dann die Nacheinspritzmenge ermittelt werden.

Falls die Nacheinspritzung beispielsweise zu einer Erhöhung des Drehmoments bzw. der Drehbeschleunigung um 12,5% führt und die Haupteinspritzmenge 4 mg/Hub beträgt, so bedeutet dies bei einer Abgasrückführrate von 50%, dass die Nacheinspritzmenge 1 mg/Hub beträgt. Die Nacheinspritzmenge berechnet sich also vorzugsweise aus der Haupteinspritzmenge $m_H$, der Abgasrückführrate AGR, dem durch die Haupteinspritzung verursachten Drehmoment $M_H$ bzw. der entsprechenden Drehbeschleunigung $a_{KW}$ und dem zusätzlichen Drehmoment $\Delta M_N$ bzw. der entsprechenden zusätzlichen Drehbeschleunigung $\Delta a_{KW}$ durch die Nacheinspritzung nach folgender Formel:

$$m_N = \frac{\Delta M_N \cdot m_H}{AGR \cdot M_H} = \frac{\Delta a_{KW} \cdot m_H}{AGR \cdot a_{KW}}$$

Die Drehbeschleunigung der Kurbelwelle kann im Rahmen der Erfindung durch zweimalige zeitliche Ableitung der Kurbelwellendrehzahl ermittelt werden, wobei die Kurbelwellendrehzahl beispielsweise von dem eingangs erwähnten Drehzahlsensor ermittelt wird.

Es ist jedoch alternativ auch möglich, dass ein Geschwindigkeitssensor vorgesehen ist, der die Drehgeschwindigkeit der Kurbelwelle misst. Die Drehbeschleunigung der Kurbelwelle ergibt sich dann durch einmalige zeitliche Ableitung der gemessenen Drehgeschwindigkeit.

Darüber hinaus kann die Drehbeschleunigung der Kurbelwelle auch direkt durch einen Beschleunigungssensor gemessen werden, so dass keine zeitliche Ableitung zur Bestimmung der Drehbeschleunigung erforderlich ist.

Schließlich besteht auch die Möglichkeit, die Drehbeschleunigung der Kurbelwelle aus anderen Betriebsgrößen der Brennkraftmaschine abzuleiten, wie beispielsweise aus der Drehzahl, der Drehgeschwindigkeit oder der Drehbeschleunigung der Nockenwelle oder einer anderen Welle, die mit der Kurbelwelle starr gekoppelt ist.

Das erfindungsgemäße Verfahren erfordert nicht zwingendermaßen die Bestimmung des Absolutwerts der Nacheinspritzmenge. Es ist vielmehr auch möglich, dass im Rahmen des erfindungsgemäßen Diagnosebetriebs nur die relative Nacheinspritzmenge in Bezug auf die als bekannt vorausgesetzte Haupteinspritzmenge ermittelt wird. Beispielsweise kann durch das erfindungsgemäße Verfahren ermittelt werden, wie der prozentuale Anteil der Nacheinspritzmenge an der Haupteinspritzmenge ist.

Neben der vorstehend beschriebenen Bestimmung der Nacheinspritzmenge ermöglicht das erfindungsgemäße Verfahren auch die Ermittlung der Voreinspritzmenge. Hierbei wird die Tatsache ausgenutzt, dass die Einspritzmenge bei Vor- oder Nacheinspritzung im wesentlichen von der Einspritzdauer und dem Differenzdruck zwischen dem Einspritzdruck und dem Gegendruck im Brennraum der Brennkraftmaschine abhängt, der wiederum durch den Einspritzzeitpunkt bestimmt wird. Zur Bestimmung der Voreinspritzmenge bei einem vorgegebenen Voreinspritz zeitpunkt und einer vorgegebenen Voreinspritzdauer sollte das erfindungsgemäße Diagnoseverfahren also mit einer Nacheinspritzung durchgeführt werden, bei welcher der gleiche Gegendruck im Brennraum herrscht. Da der Gegendruck im Brennraum im wesentlichen von dem Einspritzzeitpunkt abhängt, sollte also der Nacheinspritzzeitpunkt entsprechend ausgewählt werden, damit bei der Nacheinspritzung im Diagnosebetrieb die gleichen Einspritzbedingungen vorliegen wie bei der eigentlichen Voreinspritzung, für die die Voreinspritzmenge ermittelt werden soll.

Bei großen Einspritzdrücken ist jedoch der Gegendruck in dem Brennraum vernachlässigbar klein, so dass die Einspritzmenge von dem Einspritzzeitpunkt weitgehend unabhängig ist und nur durch die Einspritzdauer bestimmt wird. In diesem Fall muss das Diagnoseverfahren also zur Bestimmung der Voreinspritzmenge nicht zu einem bestimmten Einspritzzeitpunkt durchgeführt werden.

In einer Variante der Erfindung wird nicht nur eine bestimmte Vor- oder Nacheinspritzmenge ermittelt, die unter bestimmten Betriebsbedingungen (Einspritzzeitpunkt, Einspritzdauer, etc.) eingespritzt wird. Vielmehr werden die Betriebsbedingungen variiert, wobei jeweils die resultierende Nacheinspritzmenge in der vorstehend beschriebenen Weise ermittelt wird. Beispielsweise kann die Nacheinspritzmenge nacheinander für unterschiedliche Nacheinspritzzeitpunkte und verschiedene Nacheinspritzdauern ermittelt werden. Auf diese Weise kann die Abhängigkeit der Nacheinspritzmenge von Einspritzzeitpunkt und Einspritzdauer ermittelt und beispielsweise in einem Kennfeld abgespeichert werden. Während des normalen Betriebs der Brennkraftmaschine kann dann auf die in dem Kennfeld gespeicherten Daten zurückgegriffen werden, um die Voroder Nacheinspritzmenge zu ermitteln.

Das erfindungsgemäße Verfahren ist unter anderem bei Ottomotoren und Dieselmotoren anwendbar, jedoch ist die Erfindung nicht auf diese Typen von Brennkraftmaschinen beschränkt. Vorzugsweise wird das erfindungsgemäße Verfahren jedoch bei einem Common-Rail-Einspritzsystem eines Dieselmotors eingesetzt.

Andere vorteilhafte Weiterbildungen der Erfindung sind in den Unteransprüche enthalten oder werden nachstehend zusammen mit der Beschreibung des bevorzugten Ausführungsbeispiels der Erfindung anhand der Zeichnungen erläutert. Es zeigen:

| Figur 1a und 1b | das erfindungsgemäße Verfahren als Flussdiagramm, |
| Figur 2 | einen Einspritzverlauf mit Haupt- und Nacheinspritzung bei einem Common-Rail-Einspritzsystem, |
| Figur 3 | eine Kennlinie, welche die Abhängigkeit der Nacheinspritzmenge von der Dauer der Nacheinspritzung zeigt sowie |
| Figur 4 | eine Weiterbildung des erfindungsgemäßen Verfahrens. |

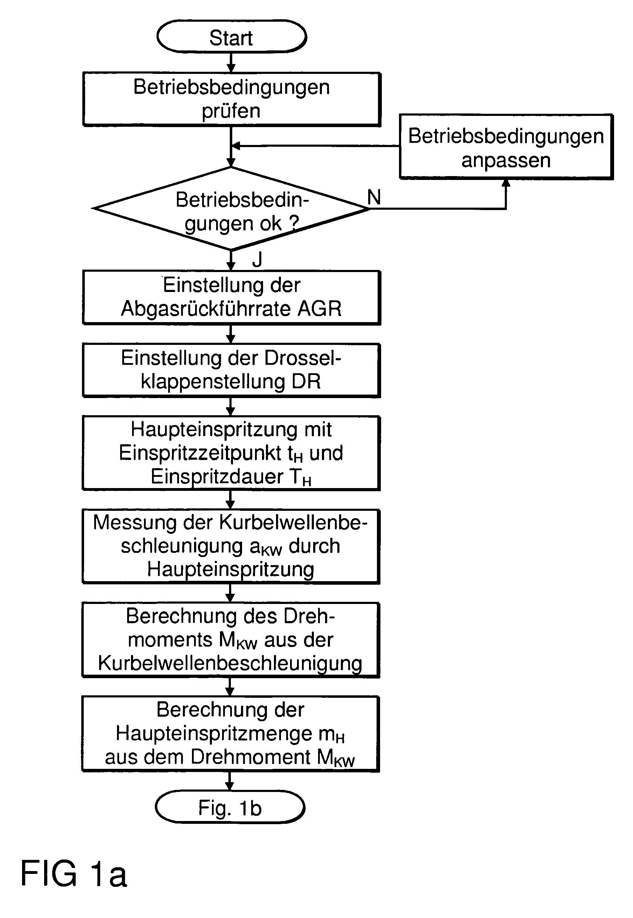

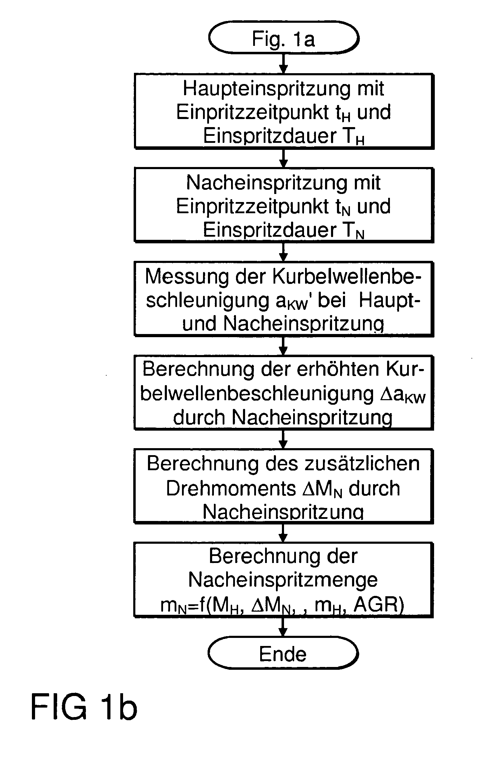

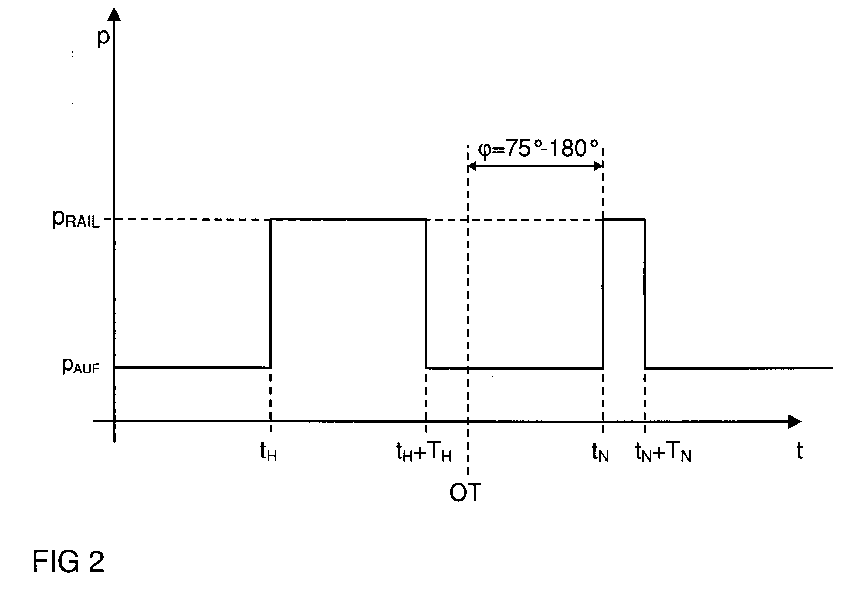

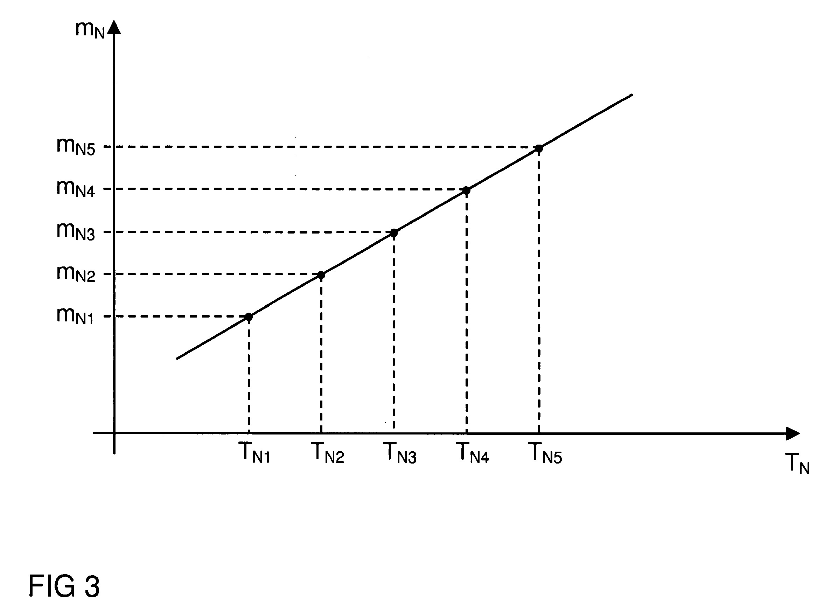

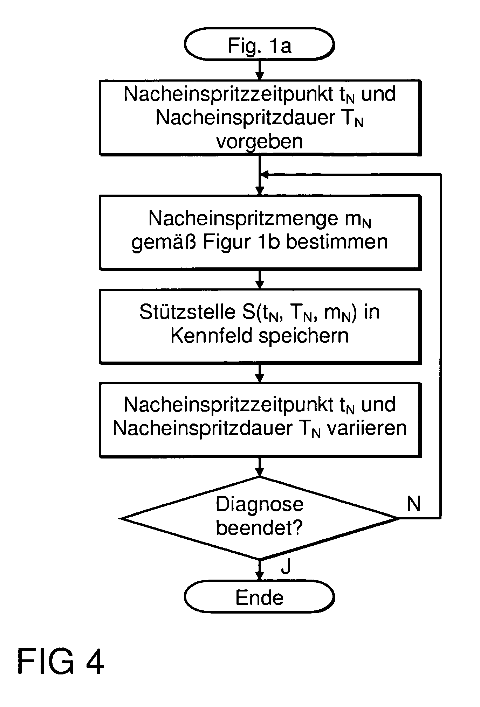

Das in den Figuren 1a und 1b dargestellte erfindungsgemäße Verfahren ermöglicht die Bestimmung der Nacheinspritzmenge einer Brennkraftmaschine in einem besonderen Diagnosebetrieb der Brennkraftmaschine.

Zu Beginn des Verfahrens wird zunächst geprüft, ob die Bedingungen für den Diagnosebetrieb erfüllt sind. So sollte der Einspritzdruck beim Diagnosebetrieb innerhalb vorgegebener Grenzen liegen. Dies ist wichtig, da die Einspritzmenge unter anderem von dem Einspritzdruck abhängt, so dass Abweichungen des Einspritzdrucks zu Messfehlern führen würden.

Falls die Bedingungen für den Diagnosebetrieb nicht erfüllt sind, so werden die Bedingungen zunächst entsprechend angepasst, indem beispielsweise der Einspritzdruck entsprechend verändert wird.

Falls die Bedingungen für den Diagnosebetrieb dagegen erfüllt sind, so wird in einem nächsten Schritt die Abgasrückführrate (AGR) ermittelt, die den prozentualen Anteil des Abgases der Brennkraftmaschine angibt, der in den Ansaugtrakt der Brennkraftmaschine zurückgeführt wird. Diese Abgasrückführung ermöglicht im normalen Betrieb der Brennkraftmaschine eine Reduzierung der Stickoxidemissionen und dient im Rahmen des Diagnosebetriebs zur Ermittlung der Nacheinspritzmenge. Die Abgasrückführrate kann hierbei durch ein Abgasrückführventil eingestellt werden und liegt deshalb in der elektronischen Motorsteuerung bereits als Steuerwert vor.

Anschließend wird dann in einem weiteren Schritt die Drosselklappenstellung DR auf einen vorgegebenen Wert eingestellt, der eine optimale Bestimmung der Nacheinspritzmenge ermöglicht.

Im nächsten Schritt erfolgt dann eine Haupteinspritzung, wobei der Einspritzzeitpunkt $t_H$ und die Haupteinspritzdauer $T_H$ vorgegeben wird.

Dabei wird die Kurbelwellenbeschleunigung $a_{KW}$ ermittelt, die durch die Haupteinspritzung verursacht wird. Hierzu wird mit einem Drehzahlsensor die Drehzahl der Kurbelwelle gemessen und durch zweimalige zeitliche Differenzierung der gemessenen Drehzahl die Kurbelwellenbeschleunigung $a_{KW}$ berechnet.

Aus der so ermittelten Kurbelwellenbeschleunigung $a_{KW}$ wird dann das Drehmoment $M_{KW}$ berechnet, das durch die Haupteinspritzung verursacht wird.

Schließlich wird dann aus dem durch die Haupteinspritzung verursachten Drehmoment $M_{KW}$ die Haupteinspritzmenge $m_H$ berechnet.

Im folgenden wird nun der in Figur 1b dargestellte Teil des erfindungsgemäßen Verfahrens beschrieben, in dem die eigentliche Bestimmung der Nacheinspritzmenge erfolgt.

Hierzu erfolgt wiederum zum Zeitpunkt $t_H$ innerhalb der einzelnen Verbrennungszyklen eine Haupteinspritzung mit der Einspritzdauer $T_H$.

Zusätzlich erfolgt im Diagnosebetrieb in jedem Verbrennungszyklus zum Zeitpunkt $t_N$ eine Nacheinspritzung mit der Einspritzdauer $T_N$, wobei der Einspritzzeitpunkt $t_N$ der Nacheinspritzung jeweils im Auslasstakt der einzelnen Verbrennungszyklen liegt. Die während der Nacheinspritzung eingespritzte Kraftstoffmenge $m_N$ wird deshalb nicht verbrannt und gelangt durch die Abgasrückführung entsprechend der vorgegebenen Abgasrückführrate AGR anteilig zurück in den Ansaugtrakt der Brennkraftmaschine, was zu einer Erhöhung des Füllungsgrades führt und damit das Drehmoment erhöht.

Anschließend wird dann wieder die Kurbelwellenbeschleunigung $a_{KW}$' ermittelt, die während des erfindungsgemäßen Diagnosebetriebs durch Haupt- und Nacheinspritzung gemeinsam verursacht wird, wobei die Kurbelwellenbeschleunigung $a_{KW}$' bei Haupt und Nacheinspritzung gegenüber der zuvor ermittelten Kurbelwellenbeschleunigung $a_{KW}$ ohne Nacheinspritzung erhöht ist. Diese Erhöhung der Kurbelwellenbeschleunigung wird dadurch verursacht, dass der während der Nacheinspritzung eingespritzte Kraftstoff unverbrannt in den Ansaugtrakt der Brennkraftmaschine zurückgeführt wird.

Aus dieser erhöhten Winkelbeschleunigung

$a_{KW}$' wird dann der Differenzwert $\Delta a_{KW} = a_{KW}' - a_{KW}$ der Kurbelwellenbeschleunigung berechnet, der allein durch die Nacheinspritzung in Verbindung mit der Abgasrückführung verursacht wird.

In einem nächsten Schritt wird dann aus der zusätzlichen Winkelbeschleunigung $\Delta a_{KW}$ in herkömmlicher Weise das zugehörige Drehmoment $\Delta M_N$ berechnet, das auf die Kurbelwelle wirkt und allein durch die Nacheinspritzung erzeugt wird.

Schließlich wird dann die Nacheinspritzmenge aus der Abgasrückführrate AGR, der Haupteinspritzmenge $m_H$, dem durch die Nacheinspritzung erzeugten Drehmoment $\Delta M_N$ und dem durch die Haupteinspritzung erzeugten Drehmoment $M_H$ nach folgender Formel berechnet:

$$m_N = \frac{\Delta M_N \cdot m_H}{AGR \cdot M_H} \ .$$

Die so ermittelte Nacheinspritzmenge $m_N$ entspricht der vorgegebenen Einspritzdauer $T_N$ der Nacheinspritzung, wobei andere Werte der Einspritzdauer $T_N$ auch zu anderen Nacheinspritzmengen führen.

Das vorstehend beschriebene Verfahren wird deshalb nacheinander für unterschiedliche Werte der Nacheinspritzdauer $T_N$, wobei jeweils die resultierende Nacheinspritzmenge $m_N$ ermittelt wird. Auf diese Weise werden dann nacheinander mehrere Stützstellen für eine in Figur 3 gezeigte Kennlinie gebildet, welche die Abhängigkeit der Nacheinspritzmenge $m_N$ von der Einspritzdauer $T_N$ wiedergibt.

Schließlich zeigt das Flussdiagramm in Figur 4 eine Weiterbildung des erfindungsgemäßen Diagnoseverfahrens, bei dem die Nacheinspritzmenge für eine Vielzahl unterschiedlicher Werte des Nacheinspritzzeitpunkts $t_N$ und der Nacheinspritzdauer $T_N$ ermittelt wird.

Hierbei werden zunächst die in Figur 1a dargestellten Verfahrensschritte durchlaufen, um die Drehbeschleunigung $a_{KW}$ der Kurbelwelle bzw. das Drehmoment $M_H$ zu ermitteln, die ohne Nacheinspritzung allein durch die Haupteinspritzung verursacht werden.

Anschließend wird dann zunächst ein Wertepaar für den Nacheinspritzzeitpunkt $t_N$ und die Nacheinspritzdauer $T_N$ vorgegeben, wobei für dieses Wertepaar die resultierende Nacheinspritzmenge $m_N$ bestimmt wird, wie vorstehend zu Figur 1b beschrieben wurde.

Die so bestimmte Nacheinspritzmenge $m_N$ wird dann zusammen mit dem zugehörigen Nacheinspritzzeitpunkt $t_N$ und der zugehörigen Nacheinspritzdauer $T_N$ als Stützstelle S in einem Kennfeld abgespeichert.

Anschließend wird dann der Nacheinspritzzeitpunkt $t_N$ und/oder die Nacheinspritzdauer $T_N$ variiert, um die resultierende Nacheinspritzmenge für unterschiedliche Betriebsbedingungen ermitteln zu können.

Das vorstehend beschriebene Verfahren wird dann wiederholt, bis das Diagnoseverfahren beendet ist. Dies kann beispielsweise dann der Fall sein, wenn eine vorgegebene Anzahl von Stützstellen $S(t_N, T_N, m_N)$ ermittelt und in dem Kennfeld abgespeichert wurde.

Während des normalen Betriebs der Brennkraftmaschine kann die Vor- oder Nacheinspritzmenge dann einfach ermittelt werden, indem der Wert entsprechend dem vorgegebenen Einspritzzeitpunkt und der vorgegebenen Einspritzdauer aus dem Kennfeld ausgelesen wird.

Die Erfindung ist nicht auf das vorstehend beschriebene bevorzugte Ausführungsbeispiel beschränkt. Vielmehr ist eine Vielzahl von Varianten und Abwandlungen möglich, die ebenfalls von dem Erfindungsgedanken Gebrauch machen und deshalb in den Schutzbereich fallen.

**Patentansprüche**

1. Verfahren zur Ermittlung der Einspritzmenge einer Brennkraftmaschine mit den folgenden Schritten:

   - Haupteinspritzung von Kraftstoff
   - Ermittlung der durch die Haupteinspritzung verursachten Drehbeschleunigung ($a_{KW}$) der Kurbelwelle
   - Bestimmung der Haupteinspritzmenge ($m_H$) aus der ermittelten Drehbeschleunigung ($a_{KW}$) der Kurbelwelle
   - Nacheinspritzung von Kraftstoff nach der Haupteinspritzung

   **gekennzeichnet durch**
   folgende Schritte:

   - Rückführung mindestens eines Teils des Abgases der Brennkraftmaschine mit dem nacheingespritzten Kraftstoff in den Ansaugtrakt der Brennkraftmaschine
   - Ermittlung der **durch** die Nacheinspritzung und die Abgasrückführung verursachten zusätzlichen Drehbeschleunigung ($\Delta a_{KW}$) der Kurbelwelle Ermittlung der Abgasrückführrate (AGR)
   - Bestimmung der Nacheinspritzmenge ($m_N$) aus der zusätzlichen Drehbeschleunigung ($\Delta a_{KW}$) der Kurbelwelle und der Abgastückführrate (AGR).

2. Verfahren nach Anspruch 1,
   **gekennzeichnet durch**
   folgende Schritte:

   - Messung der **durch** die Haupteinspritzung und/oder die Nacheinspritzung verursachten Drehbeschleunigung ($a_{KW}$, $a_{KW}$') der Kurbelwelle
   - Berechnung des auf die Kurbelwelle wirkenden Drehmoments ($M_{KW}$) aus der gemessenen Drehbeschleunigung
   - Berechnung der Haupteinspritzmenge ($m_H$) und/oder der Nacheinspritzmenge ($m_N$) aus dem berechneten Drehmoment ($M_{KW}$).

3. Verfahren nach mindestens einem der vorhergehenden Ansprüche,
   **dadurch gekennzeichnet,**
   **dass** die Nacheinspritzung während des Expansionstaktes und/oder während des Auslasstaktes der Brennkraftmaschine erfolgt.

4. Verfahren nach mindestens einem der vorhergehenden Ansprüche,
   **dadurch gekennzeichnet,**
   **dass** die Nacheinspritzung jeweils nur für einen einzigen Brennraum der Brennkraftmaschine erfolgt.

5. Verfahren nach mindestens einem der Ansprüche 1 bis 3,
   **dadurch gekennzeichnet,**
   **dass** die Nacheinspritzung für mehrere Brennräume der Brennkraftmaschine erfolgt, wobei die Zuordnung zwischen der ermittelten Nacheinspritzmenge ($m_N$) und dem zugehörigen Brennraum der Brennkraftmaschine entsprechend der Laufzeit des zurückgeführten Abgases erfolgt.

6. Verfahren nach mindestens einem der vorhergehenden Ansprüche,
   **dadurch gekennzeichnet,**
   **dass** bei der Nacheinspritzung ein Einspritzventil mit einem vorgegebenen Steuersignal angesteuert wird,
   **dass** der Zusammenhang zwischen dem Steuersignal für die Nacheinspritzung und der resultierenden Nacheinspritzmenge ($m_N$) gespeichert wird.

7. Verfahren nach mindestens einem der vorhergehenden Ansprüche,
   **dadurch gekennzeichnet,**
   **dass** das Einspritzventil nacheinander mit unterschiedlichen Steuersignalen angesteuert wird, wobei jeweils der Zusammenhang zwischen dem Steuersignal und der resultierenden Nacheinspritzmenge ($m_N$) gespeichert wird.

8. Verfahren nach Anspruch 7,
   **dadurch gekennzeichnet,**
   **dass** sich die verschiedenen Steuersignale durch den Einspritzzeitpunkt ($t_N$) und/oder die Einspritzdauer ($T_N$) unterscheiden.

**Claims**

1. Method for determining the quantity of fuel injected in an internal combustion engine with the following steps:

- main injection of fuel
- determination of the angular acceleration ($a_{KW}$) of the crankshaft caused by the main injection
- determination of the main injection quantity ($m_H$) from the determined angular acceleration ($a_{KW}$) of the crankshaft,
- subsequent injection of fuel after the main injection

**characterised by**

the following steps:

- recirculation of at least some of the exhaust gas of the internal combustion engine with the subsequently injected fuel into the intake tract of the internal combustion engine
- determination of the additional angular acceleration ($\Delta a_{KW}$) of the crankshaft caused by the subsequent injection and exhaust gas recirculation
- determination of the exhaust gas recirculation rate (AGR)
- determination (6) of the subsequent injection quantity ($m_N$) from the additional angular acceleration ($\Delta a_{KW}$) of the crankshaft and the exhaust gas recirculation rate (AGR).

2. Method according to claim 1,
   **characterised by**
   the following steps:

   - measurement of the angular acceleration ($a_{KW}$, $a_{KW}'$) of the crankshaft caused by the main injection and/or subsequent injection
   - calculation of the torque ($M_{KW}$) acting on the crankshaft from the measured angular acceleration
   - calculation of the main injection quantity ($m_H$) and/or the subsequent injection quantity ($m_N$) from the calculated torque ($M_{KW}$).

3. Method according to at least one of the preceding claims,
   **characterised in that**
   subsequent injection takes place during the expansion stroke and/or during the outlet stroke of the internal combustion engine.

4. Method according to at least one of the preceding claims,
   **characterised in that**
   subsequent injection only takes place for a single combustion chamber of the internal combustion engine in each instance.

5. Method according to at least one of claims 1 to 3,
   **characterised in that**
   subsequent injection takes place for a number of combustion chambers of the internal combustion engine, with assignment between the determined subsequent injection quantity ($m_N$) and the associated combustion chamber of the internal combustion engine taking place according to the transit time of the recirculated exhaust gas.

6. Method according to at least one of the preceding claims,
   **characterised in that**
   an injection valve is activated with a predetermined control signal during subsequent injection,
   the relationship between the control signal for subsequent injection and the resulting subsequent injection quantity ($m_N$) is stored.

7. Method according to at least one of the preceding claims,
   **characterised in that**
   the injection valve is activated successively with different control signals, the relationship between the control signal and the resulting subsequent injection quantity ($m_N$) being stored in each instance.

8. Method according to claim 7,
   **characterised in that**
   the different control signals differ in injection time ($t_N$) and/or injection duration ($T_N$).

**Revendications**

1. Procédé pour la détermination de la quantité d'injection d'un moteur à combustion interne, comprenant les étapes suivantes :

   - l'injection principale de carburant,
   - la détermination de l'accélération angulaire ($a_{KW}$) du vilebrequin provoquée par l'injection principale,
   - la détermination de la quantité d'injection principale ($m_H$) à partir de l'accélération angulaire ($a_{KW}$) du vilebrequin déterminée, et
   - l'injection secondaire de carburant après l'injection principale,
   **caractérisé par** les étapes suivantes:

   - le recyclage d'au moins une partie des gaz d'échappement du moteur à combustion interne avec le carburant d'injection secondaire dans le collecteur d'admission du moteur à combustion interne,
   - la détermination de l'accélération angulai-

re additionnelle ($\Delta a_{KW}$) du vilebrequin provoquée par l'injection secondaire et le recyclage des gaz d'échappement,
- la détermination du taux de recyclage des gaz d'échappement (AGR), et
- la détermination de la quantité d'injection secondaire ($m_N$) à partir de l'accélération angulaire additionnelle ($\Delta a_{KW}$) du vilebrequin et du taux de recyclage des gaz d'échappement (AGR).

2. Procédé selon la revendication 1, **caractérisé par** les étapes suivantes :

- la mesure de l'accélération angulaire provoquée par l'injection principale et/ou l'injection secondaire ($a_{KW}$, $a_{KW}'$) du vilebrequin,
- le calcul du couple agissant sur le vilebrequin ($M_{KW}$) à partir de l'accélération angulaire mesurée, et
- le calcul de la quantité d'injection principale ($m_H$) et/ou de la quantité d'injection secondaire ($m_N$) à partir du couple calculé ($M_{KW}$).

3. Procédé selon l'une au moins des revendications précédentes, **caractérisé en ce que** l'injection secondaire est effectuée pendant le temps de détente et/ou le temps d'échappement du moteur à combustion interne.

4. Procédé selon l'une au moins des revendications précédentes, **caractérisé en ce que** l'injection secondaire n'est effectuée que dans une seule chambre de combustion du moteur à combustion interne.

5. Procédé selon l'une au moins des revendications 1 à 3, **caractérisé en ce que** l'injection secondaire est effectuée dans plusieurs chambres de combustion du moteur à combustion interne, l'attribution de la quantité d'injection secondaire ($m_N$) déterminée à la chambre de combustion associée étant effectuée selon la durée de déplacement des gaz d'échappement recyclés.

6. Procédé selon l'une au moins des revendications précédentes, **caractérisé en ce qu'**une soupape d'injection est excitée au moyen d'un signal de commande lors de l'injection secondaire, et que la relation entre le signal de commande de l'injection secondaire et la quantité d'injection secondaire résultante ($m_N$) est enregistrée.

7. Procédé selon l'une au moins des revendications précédentes, **caractérisé en ce que** la soupape d'injection est excitée successivement par l'intermédiaire de signaux de commande différents, chaque relation entre le signal de commande de l'injection secondaire et la quantité d'injection secondaire résultante ($m_N$) étant enregistrée.

8. Procédé selon la revendication 7, **caractérisé en ce que** les différents signaux de commande se distinguent par le moment de l'injection ($t_N$) et/ou la durée de l'injection ($T_N$).

```
                    ┌─────────────┐
                    │    Start    │
                    └─────────────┘
                           │
                           ▼
            ┌──────────────────────────┐
            │  Betriebsbedingungen     │
            │        prüfen            │
            └──────────────────────────┘
                           │                    ┌──────────────────────────┐
                           │                    │  Betriebsbedingungen     │
                           ▼                    │        anpassen          │
                    ╱─────────────╲             └──────────────────────────┘
                   ╱ Betriebsbedin- ╲    N                      ▲
                  ⟨  gungen ok ?     ⟩────────────────────────────┘
                   ╲               ╱
                    ╲─────────────╱
                           │ J
                           ▼
            ┌──────────────────────────┐
            │    Einstellung der       │
            │  Abgasrückführrate AGR   │
            └──────────────────────────┘
                           │
                           ▼
            ┌──────────────────────────┐
            │  Einstellung der Drossel-│
            │   klappenstellung DR     │
            └──────────────────────────┘
                           │
                           ▼
            ┌──────────────────────────┐
            │  Haupteinspritzung mit   │
            │ Einspritzzeitpunkt tH und│
            │    Einspritzdauer TH     │
            └──────────────────────────┘
                           │
                           ▼
            ┌──────────────────────────┐
            │ Messung der Kurbelwellenbe-│
            │ schleunigung aKW durch   │
            │    Haupteinspritzung     │
            └──────────────────────────┘
                           │
                           ▼
            ┌──────────────────────────┐
            │  Berechnung des Dreh-    │
            │  moments MKW aus der     │
            │ Kurbelwellenbeschleunigung│
            └──────────────────────────┘
                           │
                           ▼
            ┌──────────────────────────┐
            │   Berechnung der         │
            │ Haupteinspritzmenge mH   │
            │ aus dem Drehmoment MKW   │
            └──────────────────────────┘
                           │
                           ▼
                    ┌─────────────┐
                    │   Fig. 1b   │
                    └─────────────┘
```

Die Blöcke enthalten:

- Start
- Betriebsbedingungen prüfen
- Betriebsbedingungen anpassen
- Betriebsbedin-gungen ok ?  (N / J)
- Einstellung der Abgasrückführrate AGR
- Einstellung der Drossel-klappenstellung DR
- Haupteinspritzung mit Einspritzzeitpunkt $t_H$ und Einspritzdauer $T_H$
- Messung der Kurbelwellenbe-schleunigung $a_{KW}$ durch Haupteinspritzung
- Berechnung des Dreh-moments $M_{KW}$ aus der Kurbelwellenbeschleunigung
- Berechnung der Haupteinspritzmenge $m_H$ aus dem Drehmoment $M_{KW}$
- Fig. 1b

# FIG 1a

Fig. 1a

Haupteinspritzung mit
Einpritzzeitpunkt $t_H$ und
Einspritzdauer $T_H$

Nacheinspritzung mit
Einpritzzeitpunkt $t_N$ und
Einspritzdauer $T_N$

Messung der Kurbelwellenbeschleunigung $a_{KW}'$ bei Haupt-
und Nacheinspritzung

Berechnung der erhöhten Kurbelwellenbeschleunigung $\Delta a_{KW}$
durch Nacheinspritzung

Berechnung des zusätzlichen
Drehmoments $\Delta M_N$ durch
Nacheinspritzung

Berechnung der
Nacheinspritzmenge
$m_N = f(M_H, \Delta M_N, , m_H, AGR)$

Ende

## FIG 1b

FIG 2

EP 1 420 157 B1

FIG 3

EP 1 420 157 B1

$$\boxed{\text{Fig. 1a}}$$

Nacheinspritzzeitpunkt $t_N$ und
Nacheinspritzdauer $T_N$
vorgeben

Nacheinspritzmenge $m_N$
gemäß Figur 1b bestimmen

Stützstelle $S(t_N, T_N, m_N)$ in
Kennfeld speichern

Nacheinspritzzeitpunkt $t_N$ und
Nacheinspritzdauer $T_N$ variieren

Diagnose
beendet?

N

J

Ende

# FIG 4